# EUROPÄISCHE PATENTSCHRIFT

(11) **EP 2 483 991 B1**
(45) Veröffentlichungstag und Bekanntmachung des Hinweises auf die Patenterteilung: **26.11.2014**
(21) Anmeldenummer: 10742081.2
(22) Anmeldetag: 09.07.2010
(51) Int. Cl.: H02K 1/14, H02K 1/27

(54) **BÜRSTENLOSER SYNCHRONMOTOR**
BRUSHLESS SYNCHRONOUS MOTOR
MOTEUR SYNCHRONE SANS BALAI

(30) Priorität: 02.10.2009 DE 102009048116
(43) Veröffentlichungstag der Anmeldung: 08.08.2012
(73) Patentinhaber: Brose Fahrzeugteile GmbH & Co. Kommanditgesellschaft, Würzburg, 97076 Würzburg (DE)
(72) Erfinder: JUNAK, Jacek, 97209 Veitshöchheim (DE); OMBACH, Grzegorz, 97209 Veitshöchheim (DE)
(74) Vertreter: Freier, Rüdiger
(86) Internationale Anmeldenummer: PCT/EP2010/004207
(87) Internationale Veröffentlichungsnummer: WO 2011/038796

(56) Entgegenhaltungen:
- DE-T2- 60 120 680
- US-A1- 2005 023 920
- US-A1- 2009 140 590

## Beschreibung

Die Erfindung bezieht sich auf einen permanenterregten bürstenlosen Synchronmotor gemäß dem Oberbegriff des Anspruchs 1. Ein derartiger Motor ist beispielsweise aus der DE 601 20 680 T2 bekannt.

Ein derartige Synchronmotor, insbesondere ein elektronisch kommutierter Vielpol-Drehstrommotor, weist einen Stator und einen häufig auch als Anker oder Rotor bezeichneten Läufer auf. Der Stator enthält in der Regel ein Statorblechpaket, das aus einer Vielzahl von einzelnen Blechen zusammengesetzt ist und Statorzähne mit zwischen diesen Statorzähnen vorgesehenen Statornuten aufweist. In die Statornuten ist die Statorwicklung (Drahtwindungen eines Wickeldrahtes) eingebracht.

Die radial verlaufenden Statorzähne sind im umfangsseitigen Joch zusammengeführt und weisen am nuteintrittsseitigen Zahnende, das dem Luftspalt zwischen dem Stator und dem Läufer zugewandt ist, beidseitig in Umfangsrichtung weisende Laschen (Pollaschen) auf. Dadurch bilden die speichenartig nach Innen in Richtung auf den Läufer weisenden Statorzähne an den dem Joch gegenüberliegenden Freienden üblicherweise sehr eng beieinanderliegende kreissegmentförmige Polschuhe aus, die das magnetische Erregerfeld entsprechend kreissegmentförmig auf den Läufer verteilen.

Die üblicherweise aus Kupfer bestehenden Phasenwicklungen eines in der Regel dreiphasigen Wicklungssystems des Stators (Statorwicklung) sind gemäß einem vorgegebenen Wickelschema mit einer bestimmten Anzahl von Windungen um die Statorzähne herum geführt. Im Betrieb des Motors werden diese Phasen- oder Statorwicklungen von einem elektrischen Strom durchflossen. Ein dadurch erzeugtes magnetisches Ständerdrehfeld erzeugt in Wechselwirkung mit dem Erregerfeld des Läufers ein diesen antreibendes Drehmoment.

Aus der EP 1 746 707 A1 ist eine permanenterregte bürstenlose Synchronmaschine bekannt, deren Läuferaußenkontur derart geformt ist, dass die in die Einzelzahn-Statorwicklung induzierte elektromagnetische Kraft (EMK), die auch als back-EMF bezeichnet wird, trapezförmig verläuft.

Insbesondre bei einer blockförmigen Klemmenspannung infolge eines ebenfalls blockförmigen Ausgangsstroms eines Wechselrichters, über den der Motor mit einer Gleichspannung versorgt wird, kann in Verbindung mit einer trapezförmigen EMK die Motorleistung um mehr als 12% gegenüber einem Motor mit sinusförmiger EMK erhöht werden, wie diese bei einer aus der DE 10 2007 038 904 A1 bekannt symmetrischen Wölbungsstruktur der Läuferaußenkontur erzeugt wird. Allerdings gelingt diese Leistungssteigerung bislang lediglich bei 8-poligen Motoren mit entsprechend acht im Läufer eingebetteten Permanentmagneten.

Der Erfindung liegt die Aufgabe zugrunde, eine entsprechende Leistungssteigerung auch bei einem höherpoligen bürstenlosen Synchronmotor zu erreichen.

Diese Aufgabe wird erfindungsgemäß gelöst durch die Merkmale des Anspruchs 1. Vorteilhafte Ausgestaltungen und Weiterbildungen sind Gegenstand der Unteransprüche.

Dazu weist die dem Läufer zugewandte Innenkontur des Stators eine Wölbungsstruktur mit an den Zahnenden der Statorzähne vorgesehenen Wölbungstälem auf, wobei sowohl die dem Luftspalt zugewandte Innenkontur des Stators mit einer unsymmetrischen Wölbungsstruktur als auch der Läufer an dessen dem Luftspalt zugewandte Außenkontur mit einer Wölbungsstruktur versehen ist, die jedoch symmetrisch ist. Die Asymmetrie der Statorwölbungsstruktur bezieht sich hierbei auf die radialen Symmetrieachsen der Statorzähne, während die Symmetrie des Läufers auf die radialen Symmetrieachsen der Permanentmagneten bezogen ist. Der Winkel zwischen zwei benachbarten Permanentmagneten beträgt bei einer Anzahl n > 8 Permanentmagneten 360°/n, während der Winkel zwischen zwei benachbarten Statorzähnen 360°/n + 2 beträgt.

Zwar ist aus der EP 0 872 943 B1 (DE 698 34 685 T2) eine elektrische Maschine mit einem bewickelten Stator mit zwölf Statorzähnen sowie mit einem mit zehn Permanentmagneten versehenen Läufer bekannt. Allerdings weist dieser ebenso wie der Stator eine herkömmlich kreisförmige, wölbungsfreie Kontur auf.

Die statorseitige Wölbungsstruktur ist vorzugsweise derart ausgebildet, dass der Luftspalt zwischen dem Läufer und den diesem zugewandten Statorzähnen periodisch zwischen einem Maximum und einen Minimum variiert, wenn der Läufer die Statorzähne passiert. Hierzu ist die statorseitige Wölbungsstruktur geeigneterweise gebildet durch jeweils ein Wölbungstal am Zahnende jedes Statorzahns. Das Wölbungstal ist hierbei - bezogen auf die radiale Symmetrieachse des Statorzahns - lediglich auf dessen einer Seite vorgesehen.

Erkanntermaßen werden besonders leistungsstarke Drehmomente erzielt, indem die Wölbungstäler zwei benachbarter Statorzähne einander zugewandt sind. Dem jeweiligen Statorzahn ist dann auf der anderen Seite ein Statorzahn mit derjenigen Seite zugewandt, die ebenfalls kein Wölbungstal aufweist. Hierdurch ist die bevorzugt asymmetrische Wölbungsstruktur der dem Luftspalt zugewandten Innenkontur des Stators gebildet.

Die symmetrische Wölbungsstruktur des Läufers an dessen dem Luftspalt zugewandten Außenkontur erreicht im mittleren Bereich eines jeden Permanentmagneten, d.h. im Bereich dessen radialer Symmetrieachse, ein Maximum. Zwischen zwei benachbarten Permanentmagneten erreicht die läuferseitige Wölbungsstruktur jeweils ein Minimum. Bei einer solchen Struktur erreicht geeigneterweise der Luftspalt zwischen dem Läufer und dem diesem zugewandten Statorzahn ein Minimum, wenn ein Maximum der läuferseitigen Wölbungsstruktur der statorseitigen Wölbungsstruktur außerhalb der Wölbungstäler der Statorzähne gegenübersteht. Steht ein Minimum der läuferseitigen Wölbungsstruktur einem Wölbungstal der statorseitigen Wölbungsstruktur gegenüber, so ist der Luftspalt an dieser Stelle maximal.

In geeigneter Ausgestaltung des permanent erregten bürstenlosen Synchronmotors ist die Anzahl der eingebetteten Permanentmagnete zehn(n = 10), während die Anzahl der Statorzähne mithin zwölf (m = n + 2 = 12) beträgt. Geeigneterweise ist damit der Winkel zwischen den benachbarten Permanentmagneten jeweils 36°, während der Winkel zwischen benachbarten Statorzähnen lediglich 30° beträgt.

In weiterer Ausgestaltung des bürstenlosen Motors weist die Statorwicklung drei Wicklungsstränge mit jeweils mindestens vier Spulen auf, von denen jeweils zwei Spulen als Spulenpaar von zwei benachbarten Statorzähnen getragen sind. Die zwei Spulenpaare desselben Wicklungsstrangs sind zweckmäßigerweise einander diametral gegenüberliegend am Statorumfang angeordnet, d.h. auf die dort vorgesehenen jeweils benachbarten Statorzähne gewickelt. Zwischen benachbarten Spulen desselben Spulenpaares und/oder zwischen nebeneinander angeordneten Spulen benachbarter Spulenpaare können Spulenisolierungen in die entsprechenden Statornuten eingelegt sein.

Die anderen beiden Spulen sitzen dann wiederum auf zwei benachbarten und diametral gegenüber liegen Statorzähnen. Indem die drei Wicklungsstränge gleichermaßen durch jeweils zwei Spulenpaare gebildet sind, die auf jeweils benachbarten Statorzähnen sitzen, ergibt sich in Umfangsrichtung des Stators ein Spulen- oder Wicklungsmuster mit aufeinanderfolgenden Spulenpaaren jedes Wicklungsstranges auf dem halben Umfang, während sich dann im verbleibenden Halbumfang das gleiche Spulenpaar-Muster anschließt.

Hierzu können die beiden Spulen des jeweiligen Wicklungsstrangs durchgehend, d. h. ohne zusätzliche Verbindungen oder Verbindungselemente zu einem Spulenpaar gewickelt sein. Sind die Spulenpaare hierbei mit nur zwei Wicklungsenden (Spulenpaarenden) versehen, weisen jeweils die zwei auf benachbarten Statorzähnen angeordnete Spulen jedes Wicklungsstranges der dreiphasigen Statorwicklung zusammen lediglich zwei zu verbindende Wicklungsenden aufweisen. Hierdurch sind die Anzahl der erforderlichen Verbindungselemente reduzier und die Bewicklung des Stators vereinfacht. Die dreiphasige Statorwicklung mit insgesamt sechs Spulenpaaren weist daher gegenüber einer dreiphasigen Statorwicklung mit zwölf Einzelspulen lediglich sechs Wicklungsenden auf. Diese Wicklungsenden können dann mit vergleichsweise geringem Aufwand sternförmig oder dreieckförmig miteinander verschaltet werden.

Nachfolgend wird ein Ausführungsbeispiel der Erfindung anhand einer Zeichnung näher erläutert. Darin zeigt:
- Fig. 1: schematisch in einer Draufsicht einen erfindungsgemäßen Elektromotor mit einem am Außenumfang strukturierten Läufer und mit einem am Innenumfang ebenfalls strukturierten Stator,
- Fig. 2: einen Ausschnitt II aus Fig. 1 in größerem Maßstab mit zwei unter Bildung eines minimalen Luftspaltes gegenüber dem Läufer stehenden Statorzähnen, und
- Fig. 3: in einer Ansicht gemäß Fig. 1 den Motor mit dreiphasiger Statorwicklung mit genüberliegenden Spulenpaaren der einzelnen Phasenwicklungen.

Einander entsprechende Teile sind in beiden Figuren mit den gleichen Bezugszeichen versehen.

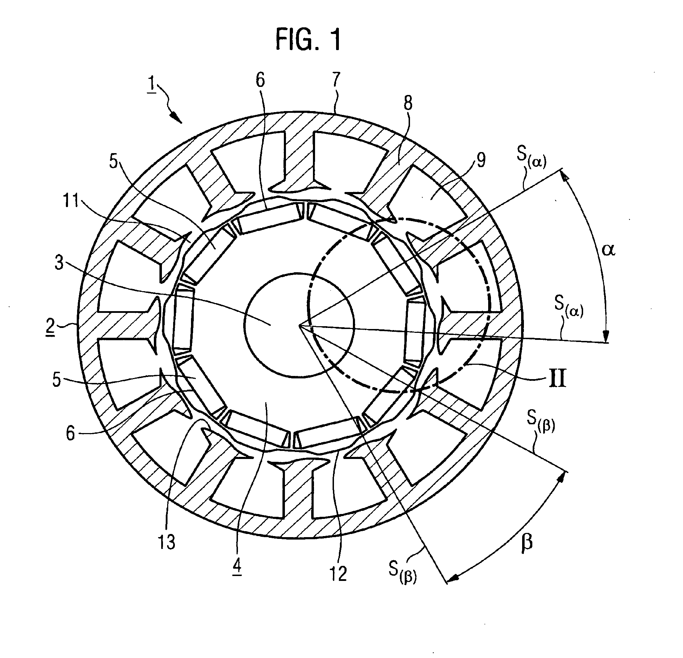

Fig. 1 zeigt schematisch einen bürstenlosen Elektro- oder Synchronmotor 1, wie dieser in Kraftfahrzeugen beispielsweise als Servomotor zur Unterstützung halb automatischer Getriebe oder dergleichen eingesetzt ist.

Der Synchronmotor 1 umfasst einen Stator 2, der einen auf einer Motorwelle oder Läuferachse 3 sitzenden Läufer 4 koaxial umgibt. Der Läufer 4 ist aus einem Blechpaket aufgebaut und weist außenumfangsseitig eine Anzahl von zehn (n = 10) Permanentmagneten 5 auf. Innerhalb des Rotors 4 bilden übereinander gestapelte Einzelbleche des Blechpaketes eine Anzahl von Taschen 6 zur Aufnahme der Permanentmagnete 5 auf.

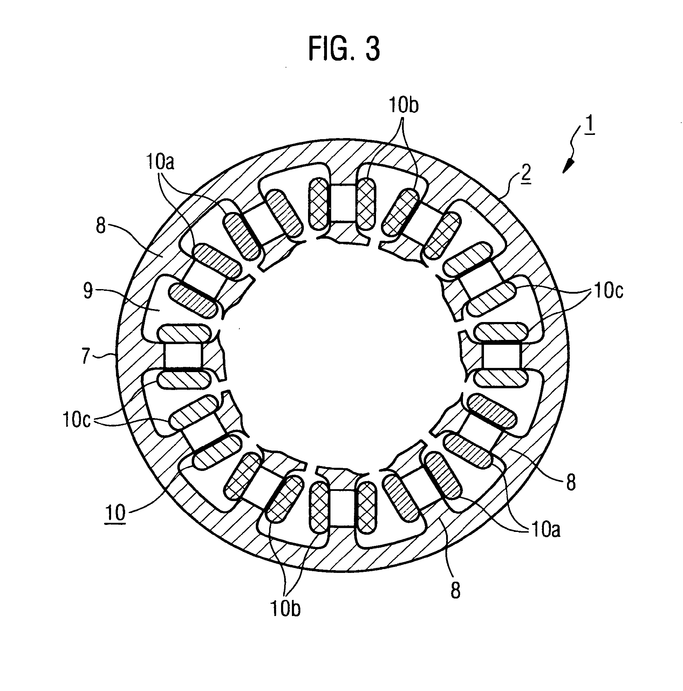

Der Stator 2, der ebenfalls aus einem Blechpaket mit übereinander gestapelten Einzelblechen ausgeführt sein kann, weist ein umfangsseitiges Joch 7 und eine gerade Anzahl von Statorzähnen 8 mit dazwischen liegenden Statornuten 9 auf. Jeder zweite Statorzahn 8 trägt eine Statorwicklung 10 (Fig. 3).

Der läuferseitig mit zehn Permanentmagneten 5 belegte Motor 1 stellt somit einen bevorzugt zehnpoligen Elektromotor 1 mit zwölf (m = n + 2 = 12) Statorzähnen 8 und zwölf Statornuten 9 dar. Der Motor 1 könnte beispielsweise auch mit zwölf (n = 12) Permanentmagneten - also 12-polig - und mit vierzehn (m = 14) Statorzähnen 8 ausgeführt sein.

Der bevorzugte permanenterregte bürstenlose Synchronmotor 1 mit n = 10 läuferseitigen Permanentmagneten 5 und statorseitig m = 12 Statorzähnen 8 weist läuferseitig zwischen benachbarten Permanentmagneten 5 einen Winkel α = 360°/n = 36° und statorseitig zwischen zwei benachbarten Statorzähnen 8 einem Winkel β = 360°/n + 2 = 30° auf. Hierbei ist der jeweilige Winkel α, β gemessen zwischen den radialen Symmetrieachsen S (α) der Permanentmagnete 5 bzw. zwischen den dargestellten radialen Symmetrieachsen S (β) der Statorzähne 8.

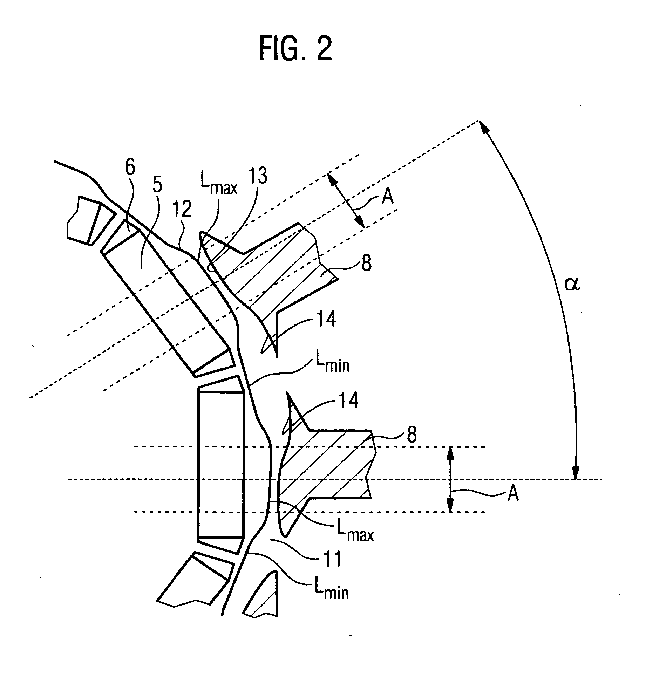

Wie aus Fig. 2 vergleichsweise deutlich ersichtlich ist, ist der Läufer 4 an dessen dem Luftspalt 11 zwischen dem Stator 2 und dem Läufer 4 zugewandten Außenkontur 12 mit einer Wölbungsstruktur mit umfangsseitig periodisch alternierenden Maxima Lₘₐₓ und Minima Lₘᵢₙ ausgebildet. Die Maxima Lₘₐₓ sind von Auswölbungen gebildet, die zum Luftspalt 11 und zu den Statorzähnen 8 des Stators 2 hin gerichtet sind. Die läuferseitigen Maxima Lₘₐₓ der Wölbungsstruktur erstrecken sich symmetrisch über einen Bereich A, der etwa die Hälfte der tangentialen Ausdehnung der Dauer- oder Permanentmagnete 5 beträgt.

Jeder Statorzahn 8 weist an dessen wiederum dem Luftspalt 11 zugewandten Innenstruktur 13 ein Wölbungstal 14 auf. Ein sich am Zahnende, d.h. im Bereich des Polschuhs des jeweiligen Statorzahns 8 an das Wölbungstal 14 anschließender Strukturbereich der Wölbungsstruktur ist gleichmäßig kreisförmig ausgebildet und überdeckt mit dessen tangentialer, sich in Umfangsrichtung erstreckender Ausdehnung den Bereich A der Wölbungsstrukur. Stehen sich diese Bereiche A der läuferseitigen und der statorseitigen Wölbungsstruktur gegenüber, so ist der radiale Luftspalt 11 minimal.

In dieser Stellung des Läufers 4 gegenüber dem Stator 2 ist der Luftspalt 11, d. h. dessen radiale Ausdehnung oder Breite im Bereich der beiden einander zugewandten Wölbungstäler 14 der benachbarten Statorzähne 8 maximal, wenn ein Minimum Lₘᵢₙ der Wölbungsstruktur des Läufers 4 diesen beiden Wellentälern 14 benachbarter Statorzähne 8 gegenübersteht. Die radiale Ausdehnung des Luftspaltes 11 variiert somit bei einer Relativbewegung zwischen Läufer 4 und Stator 2 periodisch zwischen einem Maximalwert, wenn sich die beiden Bereiche A des Statorzahns 8 und des Maximums Lₘₐₓ der Läuferaußenkontur 12 gegenüberstehen, und einem Minimalwert, wenn sich Wellentäler 14 der statorseitigen Wölbungsstruktur und Minima Lₘᵢₙ der läuferseitigen Wölbungsstruktur gegenüberstehen.

Die statorseitige Wölbungsstruktur, insbesondere in Verbindung mit der läuferseitigen Wölbungsstruktur, ermöglicht bei einem solchen zehnpoligen Synchronmotor 1 die Bereitstellung wiederum einer trapezförmigen EMK und damit wiederum einer Leistungssteigerung gegenüber herkömmlichen 10-poligen Synchronmotoren mit zwölf Statorzähnen bzw. zwölf Statornuten. Im Vergleich zu einer sinusförmigen EMK sind Drehmoment- und somit Leistungssteigerungen von mehr als 6% möglich.

Die statorseitig unsymmetrische Wölbungsstruktur, insbesondere in Verbindung mit der läuferseitig symmetrischen Wölbungsstruktur, ist besonders geeignet bei einer in Fig. 3 dargestellten dreiphasigen Statorwicklung 10 mit je Phase u, v, w jeweils zwei Spulenpaaren 10a, 10b bzw. 10c, die in dem dargestellten Muster auf die Statorzähne 8 des Stators 2 gewickelt sind. Jedes Spulenpaar 10a, 10b, 10c jeder Phase u, v bzw. w ist hierbei auf benachbarte Statorzähne 8 gewickelt. Dabei sind die beiden Spulenpaare 10a, 10b, 10c derselben Phase u, v bzw. w auf diametral gegenüberliegenden Statorzähnen 8 angeordnet.

### Bezugszeichenliste

- 1: Synchron-/Elektromotor
- 2: Stator
- 3: Läuferachse/Motorwelle
- 4: Läufer
- 5: Permanentmagnet
- 6: Tasche
- 7: Joch
- 8: Statorzahn
- 9: Statomut
- 10: Statorwicklung
- 10a: Spulenpaar der Phase u
- 10b: Spulenpaar der Phase v
- 10c: Spulenpaar der Phase w
- 11: Luftspalt
- 12: Außenkontur
- 13: Innenkontur
- 14: Wölbungstal

- α,β: Winkel
- Lₘₐₓ: Wölbungsmaximum
- Lₘᵢₙ: Wölbungsminimum
- S (α): Symmetrieachse
- S(β): Symmetrieachse

## Patentansprüche

1. Bürstenloser Synchronmotor (1) mit einem Läufer (4), der eine Anzahl n eingebetteter Permanentmagneten (5) aufweist und unter Bildung eines Luftspaltes (11) gegenüber einem Stator (2) drehbar ist, der eine Anzahl von mit einer dreiphasigen Statorwicklung (10) versehenen Statorzähnen (8) umfasst, wobei die dem Läufer (4) zugewandte Innenkontur (13) des Stators (2) eine Wölbungsstruktur mit an den Statorzähne (8) endseitig vorgesehenen Wölbungstälern (14) aufweist,
**dadurch gekennzeichnet,**
- **dass** die Innenkontur (13) des Stators (2) eine asymmetrische Wölbungsstruktur und die dem Stator (2) zugewandte Außenkontur (12) des Läufers (4) eine symmetrische Wölbungsstruktur aufweist, wobei die Wölbungstäler (14) benachbarter Statorzähne (8) einander zugewandt sind, und wobei die dem Stator (2) zugewandte Außenkontur (12) des Läufers (4) eine zu den Statorzähnen (8) gerichtete periodische Wölbungsstruktur aufweist, die im mittleren Bereich eines jeden Permanentmagneten (5) ein Maximum (Lₘₐₓ) und zwischen zwei benachbarten Permanentmagneten (5) ein Minimum (Lₘᵢₙ) erreicht,
- **dass** der Winkel (α) zwischen zwei benachbarten Permanentmagneten (5) 360°/n mit n > 8 beträgt, und
- **dass** der Winkel (β) zwischen zwei benachbarten Statorzähnen (8) 360°/n + 2 beträgt.

2. Bürstenloser Synchronmotor (1) nach Anspruch 1,
**dadurch gekennzeichnet,**
**dass** der Luftspalt (11) zwischen dem Läufer (4) und den diesem zugewandten Statorzähnen (8) periodisch zwischen einem Maximalwert und einem Minimalwert variiert, wenn der Läufer (4) die Statorzähne (8) passiert.

3. Bürstenloser Synchronmotor (1) nach Anspruch 1 oder 2,
**dadurch gekennzeichnet,**
**dass** der Luftspalt (11) zwischen dem Läufer (4) und dem diesem zugewandten Statorzahn (8) einen Minimalwert erreicht, wenn ein Maximum (Lₘₐₓ) der läuferseitigen Wölbungsstruktur der statorseitigen Wölbungsstruktur außerhalb der Wölbungstäler (14) der Statorzähne (8) gegenübersteht.

4. Bürstenloser Synchronmotor (1) nach einem der Ansprüche 1 bis 3,
**dadurch gekennzeichnet,**
**dass** die Anzahl eingebetteter Permanentmagneten (5) n = 10 und die Anzahl der Statorzähne (8) m = n + 2 = 12 beträgt, wobei der Winkel (α) zwischen den benachbarten Permanentmagneten (5) α = 36° und der Winkel (β) zwischen den benachbarten Statorzähnen (8) β = 30° beträgt.

5. Bürstenloser Synchronmotor (1) nach einem der Ansprüche 1 bis 4,
**dadurch gekennzeichnet,**
**dass** die Statorwicklung (10) drei Wicklungsstränge mit jeweils mindestens vier Spulen (10a,10b,10c) aufweist, wobei jeweils zwei der vier Spulen (10a,10b,10c) jedes Wicklungsstranges von zwei benachbarten Statorzähne (8) getragen sind.

6. Bürstenloser Synchronmotor (1) nach Anspruch 5,
**dadurch gekennzeichnet,**
**dass** die jeweils zwei Spulen (10a, 10b, 10c) den anderen beiden Spulen (10a, 10b, 10c) dieses Wicklungsstranges gegenüberliegend angeordnet sind.

## Claims

1. Brushless synchronous motor (1) having a rotor (4), which has a number n of embedded permanent magnets (5) and is rotatable by forming an air gap (11) opposite a stator (2), which comprises a number of stator teeth (8) provided with a three-phase stator winding (10), wherein the inner contour (13) of the stator (2) facing the rotor (4) has an arched structure having arched valleys (14) provided on the end side on the stator teeth (8),
**characterised in that**,
- the inner contour (13) of the stator (2) has an asymmetrical arched structure and the outer contour (12) of the rotor (4) facing the stator (2) has a symmetrical arched structure, wherein the stator teeth (8) adjacent to the arched valleys (14) are facing one another, and wherein the outer contour (12) of the rotor (4) facing the stator (2) has an intermittent arched structure directed towards the stator teeth (8), which reaches a maximum (Lₘₐₓ) in the central region of each permanent magnet (5) and a minimum (Lₘᵢₙ) between two adjacent permanent magnets (5),
- the angle (α) between two adjacent permanent magnets (5) is 360°/n where n > 8,
- the angle (β) between two adjacent stator teeth (8) is 360°/n + 2.

2. Brushless synchronous motor (1) according to claim 1,
**characterised in that**,
the air gap (11) between the rotor (4) and the stator teeth (8) facing this varies intermittently between a maximum value and a minimum value, if the rotor (4) passes the stator teeth (8).

3. Brushless synchronous motor (1) according to claim 1 or 2,
**characterised in that**,
the air gap (11) between the rotor (4) and the stator tooth (8) facing this reaches a minimum value, if a maximum (Lₘₐₓ) of the rotor-side arched structure is located opposite the stator-side arched structure outside of the arched valleys (14) of the stator teeth (8).

4. Brushless synchronous motor (1) according to one of claims 1 to 3,
**characterised in that**,
the number of embedded permanent magnets (5) is n = 10 and the number of stator teeth (8) is m = n + 2 = 12, wherein the angle (α) between the adjacent permanent magnets (5) is α = 36° and the angle (β) between the adjacent stator teeth (8) is β = 30°.

5. Brushless synchronous motor (1) according to one of claims 1 to 4,
**characterised in that**,
the stator winding (10) has three winding strands, each having at least four coils (10a, 10b, 10c), wherein two of the four coils (10a, 10b, 10c) of each winding strand are carried respectively by two adjacent stator teeth (8).

6. Brushless synchronous motor (1) according to claim 5,
**characterised in that**,
the two coils (10a, 10b, 10c) are arranged opposite the other two coils (10a, 10b, 10c) of this winding strand respectively.

## Revendications

1. Moteur synchrone (1) sans balais comprenant un induit ou rotor (4), qui présente un nombre n d'aimants permanents (5) noyés, et est rotatif, en formant un entrefer (11), par rapport à un stator (2) doté pour sa part d'un nombre de dents de stator (8) pourvues d'un enroulement de stator (10) triphasé, le contour intérieur (13) du stator (2), dirigé vers le rotor (4), présentant une structure à courbures avec des creux de courbure (14) prévus au niveau des extrémités sur les dents de stator (8),
**caractérisé**
- **en ce que** le contour intérieur (13) du stator (2) présente une structure à courbures, asymétrique, et le contour extérieur (12) du rotor (4), qui est dirigé vers le stator (2), présente une structure à courbures, symétrique, les creux de courbures (14) de dents de stator (8) voisines étant dirigés l'un vers l'autre, et le contour extérieur (12) du rotor (4), dirigé vers le stator (2), présentant une structure à courbures, périodique, dirigée vers les dents de stator (8) et atteignant un maximum (Lₘₐₓ) dans la zone médiane de chaque aimant permanent (5) et un minimum (Lₘᵢₙ) entre deux aimants permanents (5) voisins,
- **en ce que** l'angle (α) entre deux aimants permanents (5) voisins vaut 360°/n avec n > 8, et
- **en ce que** l'angle (β) entre deux dents de stator (8) voisines vaut 360°/n+2.

2. Moteur synchrone (1), sans balais selon la revendication 1,
**caractérisé**
**en ce que** l'entrefer (11) entre le rotor (4) et les dents de stator (8) dirigées vers celui-ci, varie périodiquement entre une valeur maximale et une valeur minimale, lorsque le rotor (4) passe au-devant des dents de stator (8).

3. Moteur synchrone (1) sans balais, selon la revendication 1 ou la revendication 2,
**caractérisé**
**en ce que** l'entrefer (11) entre le rotor (4) et les dents de stator (8) dirigées vers celui-ci, atteint une valeur minimale lorsqu'un maximum (Lₘₐₓ) de la structure à courbures côté rotor se trouve en regard de la structure à courbures côté stator, à l'extérieur des creux de courbures (14) des dents de stator (8).

4. Moteur synchrone (1) sans balais, selon l'une des revendications 1 à 3,
**caractérisé**
**en ce que** le nombre d'aimants permanents (5) noyés vaut n = 10, et le nombre des dents de stator (8) m = n + 2 = 12, l'angle (α) entre les aimants permanents (5) voisins valant α = 36°, et l'angle (β) entre les dents de stator (8) voisines β = 30°.

5. Moteur synchrone (1) sans balais, selon l'une des revendications 1 à 4,
**caractérisé**
**en ce que** l'enroulement de stator (10) présente trois enroulements de phase avec chacun au moins quatre bobines (10a, 10b, 10c), respectivement deux des quatre bobines (10a, 10b, 10c) de chaque enroulement de phase étant portées par deux dents de stator (8) voisines.

6. Moteur synchrone (1) sans balais, selon la revendication 5,
**caractérisé**
**en ce que** lesdites deux bobines respectives (10a, 10b, 10c) sont agencées à l'opposé des deux autres bobines (10a, 10b, 10c) de cet enroulement de phase considéré.
